# FASCICULE DE BREVET EUROPEEN

(11) **EP 2 207 697 B1**
(45) Date de publication et mention de la délivrance du brevet: **01.06.2011**
(21) Numéro de dépôt: 08847452.3
(22) Date de dépôt: 31.10.2008
(51) Int. Cl.: B60L 11/18

(54) **PROCEDE DE GESTION DE L'ENERGIE DANS UN VEHICULE AUTOMOBILE**
VERFAHREN ZUR ENERGIEVERWALTUNG IN EINEM KRAFTFAHRZEUG
METHOD OF ENERGY MANAGEMENT IN A MOTOR VEHICLE

(30) Priorité: 05.11.2007 FR 0758801
(43) Date de publication de la demande: 21.07.2010
(73) Titulaire: Renault S.A.S., 92100 Boulogne-Billancourt (FR)
(72) Inventeur: BALMY, RICHARD, 92800 Puteaux (FR)
(86) Numéro de dépôt international: PCT/FR2008/051972
(87) Numéro de publication internationale: WO 2009/060156

(56) Documents cités:
- EP-A- 1 055 545
- EP-A- 1 745 967
- JP-A- 2006 296 106
- US-A1- 2004 062 963
- US-B1- 6 555 928
- US-B1- 7 013 205

## Description

La présente invention concerne un procédé de gestion de l'énergie dans un véhicule automobile comprenant un système de traction électrique alimenté par au moins une batterie et une source d'énergie électrique annexe apte à compléter l'énergie fournie par la batterie pour l'alimentation du système de traction électrique et à laquelle est associé un réservoir de carburant alimentant ladite source d'énergie électrique.

Aujourd'hui, participer à la réduction des émissions de CO2 et donc à la maîtrise de l'effet de serre est devenu un enjeu majeur de l'industrie automobile. C'est dans ce contexte que les véhicules mus par l'énergie électrique ont connu leur essor.

Or, les véhicules électriques actuels à batterie ont des autonomies réduites par rapport aux véhicules à moteur thermique conventionnels.

Aussi, l'industrie automobile s'est orienté vers le développement de véhicules électriques à prolongation d'autonomie ou « range extender », dotés d'une source d'énergie électrique annexe à la batterie et susceptible de venir compléter l'énergie électrique fournie par cette dernière, permettant ainsi d'augmenter l'autonomie du véhicule.

Cette source d'énergie électrique annexe peut consister en un moteur à combustion interne couplé à un alternateur, une pile à combustible alimentée directement en hydrogène, une pile à combustible couplée à un système de reformage alimenté en carburant fossile, ou tout autre système permettant de produire de l'énergie électrique. Un véhicule automobile à traction électrique comportant une batterie et une pile à combustion est connu du document JP2006296106.

Un véhicule automobile à traction électrique comportant une batterie et une pile à combustion est connu du document JP2006296106.

Il existe alors un besoin pour contrôler efficacement la répartition des différentes sources d'énergie électrique pour fournir la puissance électrique nécessaire au véhicule en maximisant son autonomie.

Avec cet objectif en vue, le procédé objet de l'invention, par ailleurs conforme à la définition générique qu'en donne le préambule ci-dessus, est essentiellement caractérisé en ce qu'il comprend, la détermination de l'activation ou non de la source d'énergie électrique annexe et, en cas d'activation, le pilotage de celle-ci pour qu'elle fournisse un niveau de puissance électrique choisi exclusivement parmi un premier niveau bas de puissance et un second niveau haut de puissance, selon le signe de l'écart calculé entre la variation d'un état de remplissage du réservoir et la variation d'un état de charge de la batterie, les premier et second niveaux de puissances étant définis de façon à limiter les pertes d'énergie liées à la transformation du carburant en énergie électrique par la source d'énergie électrique annexe.

Avantageusement, on choisit le premier niveau bas de puissance si l'écart est négatif et le second niveau haut de puissance si ledit écart est positif.

Selon un mode de réalisation, la variation de l'état de remplissage du réservoir comprend la détermination d'un premier rapport entre un état de remplissage courant du réservoir et un état de remplissage initial dudit réservoir lors de l'activation de la source d'énergie électrique annexe, et en ce que la variation de l'état de charge de la batterie comprend la détermination d'un second rapport entre un état de charge courant de la batterie et un état de charge initial de la batterie lors de l'activation de la source d'énergie électrique annexe.

De préférence, la détermination de la variation de l'état de charge de la batterie tient compte d'un seuil de charge minimum de la batterie.

Avantageusement, la source d'énergie électrique annexe est utilisée pour recharger la batterie si le niveau de puissance électrique fourni par ladite source d'énergie électrique annexe est supérieur à la puissance électrique requise par le système de traction électrique.

Selon un mode de réalisation, le procédé selon l'invention est couplé avec un système de navigation du véhicule automobile et en ce que la détermination de l'activation de la source d'énergie électrique annexe et le pilotage de celle-ci prennent en compte des paramètres fournis par le système de navigation du véhicule.

Avantageusement, les paramètres fournis par le système de navigation comprennent au moins l'un des paramètres suivants parmi un point d'arrivée du véhicule, un itinéraire défini pour le véhicule, et une information d'identification de zones à émission polluantes restreintes le long dudit itinéraire.

Selon divers modes de réalisation, la source d'énergie électrique annexe comprend un moteur à combustion interne couplé à un alternateur, ou une pile à combustible alimentée directement en hydrogène, ou une pile à combustible couplée à un système de reformage.

Avantageusement, le système de traction électrique comprend une machine électrique apte à fonctionner en mode moteur et en mode générateur.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 est un organigramme illustrant un premier mode de réalisation du procédé de gestion de l'énergie selon l'invention, et
- la figure 2 est un organigramme illustrant un deuxième mode de réalisation du procédé de gestion de l'énergie selon l'invention, avec couplage avec un système de navigation du véhicule automobile.

L'objet de la présente invention est donc de proposer un procédé permettant de contrôler le fonctionnement de la source d'énergie électrique annexe du véhicule électrique, disposant par ailleurs d'un système de batterie électrique pour fournir de l'énergie au système de traction électrique du véhicule. Le système de traction électrique du véhicule comprend classiquement une machine électrique susceptible de fonctionner d'une part, en mode moteur et, d'autre part, en mode générateur, entraîné alors par les roues du véhicule.

Selon un principe de l'invention, la source d'énergie électrique annexe du véhicule est adaptée de façon à pouvoir fonctionner à deux niveaux de puissance différents, respectivement un premier niveau bas P1 et un second niveau haut P2, considérés relativement l'un par rapport à l'autre.

En outre, ces deux niveaux de puissance correspondent chacun à un point de fonctionnement optimisé en rendement de la source d'énergie électrique annexe. Plus précisément, le fait de faire fonctionner la source d'énergie électrique annexe sur ces points de fonctionnement optimisés, respectivement P1 et P2, permet de minimiser les pertes liées à la transformation du carburant alimentant la source d'énergie électrique annexe en énergie électrique.

Selon l'invention, la source d'énergie électrique annexe est prévue pour fonctionner uniquement sur ces deux points de fonctionnement. Autrement dit, elle sera pilotée de manière à fournir un niveau de puissance électrique choisi exclusivement parmi le premier niveau bas de puissance P1 et le second niveau haut de puissance P2.

La présente invention repose en outre sur le principe suivant lequel l'autonomie maximale du véhicule sera obtenue lorsque l'utilisation de la batterie et l'utilisation du réservoir alimentant la source d'énergie électrique annexe seront régulières et proportionnelles, de façon à vider le carburant disponible en même temps que la batterie.

Pour mettre en place cette loi de gestion d'énergie, il est nécessaire de disposer d'un système apte à déterminer l'état de charge courant de la batterie, ainsi que l'état de remplissage courant du réservoir alimentant la source d'énergie électrique annexe en carburant. Ces deux états seront exprimés en pourcentage. Ainsi, soient :
R : l'état de remplissage courant du réservoir alimentant la source d'énergie électrique annexe, et
B : l'état de charge courant de la batterie.

Au moment de l'activation de la source d'énergie électrique annexe, on prévoit en outre de mesurer les états instantanés initiaux de charge de la batterie et de remplissage du réservoir. Ces deux états seront également exprimés en pourcentage, soient :
R0 : l'état de remplissage initial du réservoir alimentant la source d'énergie électrique annexe lorsque celle-ci est activée, et
B0 : l'état de charge initial de la batterie lorsque la source d'énergie électrique annexe est activée.

On cherche donc à maintenir le rapport R/R0, représentatif de la variation de l'état de remplissage du réservoir alimentant la source d'énergie électrique annexe en carburant, proche du rapport B/B0 représentatif de la variation de l'état de charge de la batterie.

Le choix de l'une ou l'autre des deux puissances de fonctionnement P1 et P2 optimisées en rendement de la source d'énergie électrique annexe sera alors fonction du signe de l'écart calculé entre le premier rapport R/R0 et le second rapport B/B0

Selon un mode de réalisation, pour des questions de fiabilité de la batterie, on peut désirer que son état de charge ne descende pas sous un seuil de charge minimum, 30% par exemple, pendant que l'on vide le réservoir. On prévoit alors de mettre en place un système de régulation permettant de tenir compte d'un seuil de charge minimum de la batterie, en maintenant le rapport R/R0 proche de (B-X/100)/(B0-X/100), X étant le seuil de charge minimum de la batterie.

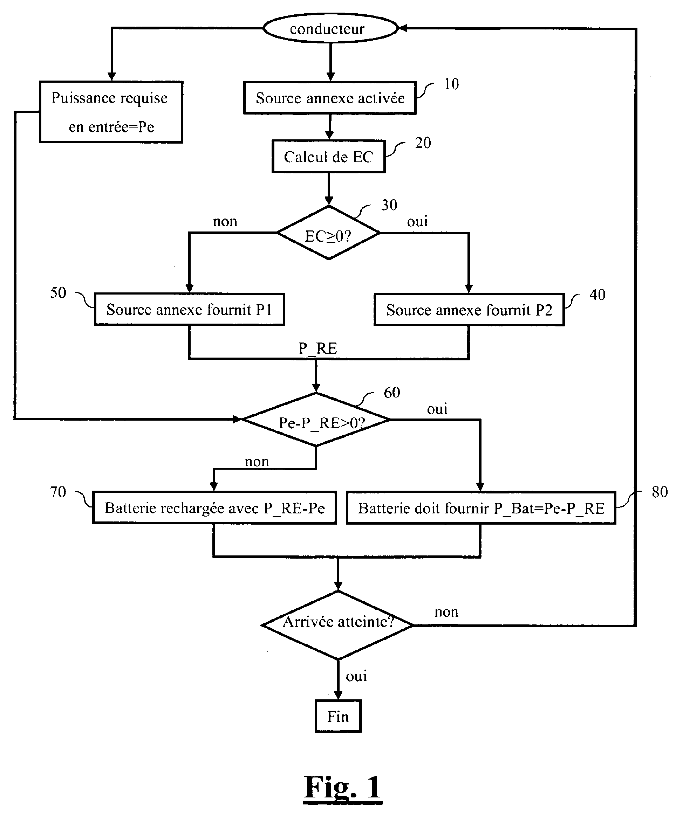

L'organigramme fourni à titre d'exemple à la figure 1 illustre justement ce cas de figure.

Ainsi, une étape 10 d'activation de la source d'énergie électrique annexe, à l'initiative du conducteur, est tout d'abord mise en oeuvre. Le conducteur décide en effet d'activer ou non la source d'énergie électrique annexe du véhicule. Si celle-ci n'est pas activée, le véhicule restera alors en mode électrique pur. Si, au contraire, elle est activée, la loi de gestion auto adaptative selon l'invention est mise en oeuvre, permettant de décider des points de fonctionnement P1 et P2 sur lesquels la source d'énergie électrique annexe sera sollicitée, de façon à maximiser l'autonomie du véhicule.

Pour ce faire, une étape 20 est mise en oeuvre consistant à calculer l'écart EC= R/R0-(B-X/100)/(B0-X/100).

Suit une étape 30 consistant à déterminer le signe de cet écart. Si celui-ci est positif, cela signifie que la batterie se vide plus vite que le réservoir alimentant la source d'énergie électrique annexe en carburant. Dans cette situation, on choisit de faire fonctionner dans une étape 40 la source d'énergie électrique annexe de manière à ce qu'elle fournisse un niveau de puissance électrique P_RE correspondant à son niveau de puissance haut P2 prédéfini, optimisé en rendement.

Si EC est négatif, cela signifie au contraire que le réservoir alimentant la source d'énergie électrique annexe en carburant se vide plus vite que la batterie et que cette dernière n'est donc pas suffisamment sollicitée. On choisit donc de faire fonctionner dans une étape 50 la source d'énergie électrique annexe de manière à ce qu'elle fournisse un niveau de puissance électrique P_RE correspondant à son niveau de puissance bas P1 prédéfini, optimisé en rendement.

On ajoute de préférence une hystérésis sur les seuils de passage de P1 P2, de façon à limiter les passages d'un niveau de fonctionnement à un autre de la source d'énergie électrique annexe.

On compare alors dans une étape 60 la puissance électrique Pe requise en entrée du système de traction électrique du véhicule avec le niveau de puissance P_RE fourni par la source d'énergie électrique annexe.

Si le niveau de puissance électrique P_RE fourni par la source d'énergie électrique annexe est supérieur à la puissance électrique Pe requise en entrée par le système de traction électrique (Pe-P_RE<0), la source d'énergie électrique annexe est également utilisée dans une étape 70 pour recharger la batterie. Cette dernière est alors rechargée avec la puissance P_RE-Pe.

Dans le cas contraire, si le niveau de puissance électrique P_RE fourni par la source d'énergie électrique annexe est inférieur à la puissance électrique Pe requise en entrée par le système de traction électrique (Pe-P_RE>0), la batterie doit alors fournir dans une étape 80 une puissance P_Bat=Pe-P_RE.

Les étapes 10 à 80 précédemment décrites sont alors répétées tant que la destination d'arrivée du véhicule n'est pas atteinte.

Un des avantages du procédé selon l'invention tel qu'il vient d'être décrit est de permettre que la source d'énergie électrique annexe ne recharge pas trop la batterie, limitant ainsi les pertes liées au transfert de l'énergie électrique à l'énergie chimique. Cela permet aussi de bénéficier au maximum des effets du freinage récupératif quand le système de traction électrique du véhicule fonctionne en mode générateur.

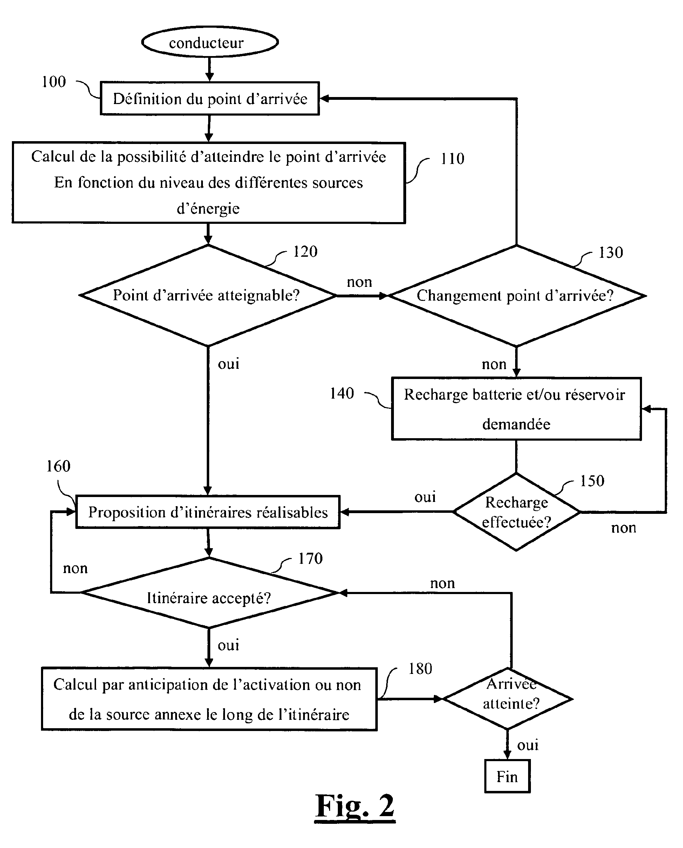

Le procédé tel qu'il vient d'être décrit pourra également être couplé à un système de navigation du véhicule, comme illustré par l'organigramme de la figure 2. Ainsi, la détermination de l'activation de la source d'énergie électrique annexe et le pilotage de celle-ci pourront avantageusement prendre en compte des paramètres fournis par le système de navigation du véhicule.

Selon l'organigramme illustré à la figure 2, avant son départ, le conducteur programme dans une étape 100 un point d'arrivée par l'intermédiaire du système de navigation. Puis, en fonction du niveau des différentes sources d'énergie du véhicule et de la consommation du véhicule au cours du trajet, on calcule dans une étape 110 la possibilité d'atteindre ou non le point d'arrivée programmé.

A l'étape 120, si le point d'arrivée n'est pas atteignable, le conducteur se verra proposer via une interface homme machine de modifier son point d'arrivée à l'étape 130. Sinon, à une étape 140, le conducteur se verra proposer de remplir le réservoir alimentant la source d'énergie électrique annexe et/ou de recharger la batterie, jusqu'à un certain niveau, de manière à permettre au véhicule d'atteindre le point d'arrivée.

Si le point d'arrivée a été calculé comme étant atteignable à l'étape 120 ou si la recharge de la batterie et/ou du réservoir demandée à l'étape 140 a effectivement été effectuée à l'étape 150 pour rendre le point d'arrivée atteignable, un certain nombre d'itinéraires réalisables pour atteindre le point d'arrivée est proposé au conducteur via le système de navigation dans une étape 160.

Une fois un itinéraire choisi par le conducteur à l'étape 170, une étape 180 met en oeuvre un calcul par anticipation de l'énergie totale dont le véhicule aura besoin, de manière à décider des moments où la source d'énergie annexe sera activée ou non le long de l'itinéraire choisi et à quel niveau de puissance il fonctionnera selon les principes déjà exposés plus haut.

Ce calcul de l'activation ou non de la source d'énergie électrique annexe et du choix du niveau de puissance de celle-ci le long de l'itinéraire choisi via le système de navigation pourra également tenir compte de différentes contraintes liées à la réglementation, comme la limitation des émissions polluantes dans certaines zones le long de l'itinéraire choisi.

En effet, si l'itinéraire prévu par le système de navigation prévoit un passage dans une zone à émissions polluantes restreintes, la loi de gestion d'énergie activera ou non la source d'énergie électrique annexe, de façon à permettre au véhicule de se rendre à son point d'arrivée tout en respectant la réglementation, en atteignant la zone à émissions polluantes restreintes avec un niveau de charge de la batterie lui permettant de traverser cette zone.

La stratégie de répartition optimisée de l'utilisation des différentes sources d'énergie du véhicule pourra également tenir compte de caractéristiques de vieillissement de la batterie. En effet, selon les sollicitations appliquées à la batterie, sa durée de vie sera plus ou moins altérée. Des paramètres comme les variations d'état de charge, le profil de recharge ou de décharge, vont impacter sa durée de vie. Ces paramètres pourront être intégrés à la loi de gestion de l'énergie pour permettre de les respecter au maximum. Par exemple, si pour minimiser le vieillissement de la batterie, il est préconisé de la stocker à un niveau de charge de 50% et que l'utilisateur gare son véhicule avec une batterie à 30% d'état de charge, la source d'énergie électrique annexe se mettra en route pour recharger la batterie et permettre ainsi de limiter son vieillissement. Selon un autre exemple, si pour limiter le vieillissement de la batterie, cette dernière doit fonctionner dans une plage d'état de charge comprise entre 50 et 30%, la source d'énergie électrique annexe sera piloté de manière à ce que la batterie fonctionne en restant dans cette plage de fonctionnement.

## Revendications

1. Procédé de gestion de l'énergie dans un véhicule automobile comprenant un système de traction électrique alimenté par au moins une batterie et une source d'énergie électrique annexe à la batterie, apte à compléter la puissance électrique fournie par la batterie pour l'alimentation du système de traction électrique et à laquelle est associé un réservoir de carburant alimentant ladite source d'énergie électrique, ledit procédé étant **caractérisé en ce qu'**il comprend la détermination de l'activation (10) ou non de la source d'énergie électrique annexe et, en cas d'activation, le pilotage de celle-ci pour qu'elle fournisse un niveau de puissance électrique (P_RE) choisi exclusivement parmi un premier niveau bas de puissance (P1) et un second niveau haut de puissance (P2), selon le signe de l'écart calculé entre la variation d'un état de remplissage du réservoir et la variation d'un état de charge de la batterie, les premier et second niveaux de puissances étant définis de façon à limiter les pertes d'énergie liées à la transformation du carburant en énergie électrique par la source d'énergie électrique annexe.

2. Procédé selon la revendication 1, **caractérisé en ce qu'**on choisit le premier niveau bas de puissance si l'écart est négatif et le second niveau haut de puissance si ledit écart est positif.

3. Procédé selon la revendication 1 ou 2, **caractérisé en ce que** la variation de l'état de remplissage du réservoir comprend la détermination d'un premier rapport entre un état de remplissage courant du réservoir et un état de remplissage initial dudit réservoir lors de l'activation de la source d'énergie électrique annexe, et **en ce que** la variation de l'état de charge de la batterie comprend la détermination d'un second rapport entre un état de charge courant de la batterie et un état de charge initial de la batterie lors de l'activation de la source d'énergie électrique annexe.

4. Procédé selon la revendication 3, **caractérisé en ce que** la détermination de la variation de l'état de charge de la batterie tient compte d'un seuil de charge minimum de la batterie.

5. Procédé selon l'une quelconque des revendications précédentes, **caractérisé en ce** la source d'énergie électrique annexe est utilisée pour recharger la batterie si le niveau de puissance électrique (P_RE) fourni par ladite source d'énergie électrique annexe est supérieur à la puissance électrique requise (Pe) par le système de traction électrique.

6. Procédé selon l'une quelconque des revendications précédentes, **caractérisé en ce qu'**il est couplé avec un système de navigation du véhicule automobile et **en ce que** la détermination de l'activation de la source d'énergie électrique annexe et le pilotage de celle-ci prennent en compte des paramètres fournis par le système de navigation du véhicule.

7. Procédé selon la revendication 6, **caractérisé en ce que** les paramètres fournis par le système de navigation comprennent au moins l'un des paramètres suivants parmi un point d'arrivée du véhicule, un itinéraire défini pour le véhicule, et une information d'identification de zones à émission polluantes restreintes le long dudit itinéraire.

8. Procédé selon l'une quelconque des revendications précédentes, **caractérisé en ce que** la source d'énergie électrique annexe comprend un moteur à combustion interne couplé à un alternateur, ou une pile à combustible alimentée directement en hydrogène, ou une pile à combustible couplée à un système de reformage.

9. Procédé selon l'une quelconque des revendications précédentes, **caractérisé en ce que** le système de traction électrique comprend une machine électrique apte à fonctionner en mode moteur et en mode générateur.

## Claims

1. Method of energy management in a motor vehicle comprising an electric traction system powered by at least one battery and an electric energy source supplementing the battery, able to complement the electric power supplied by the battery to power the electric traction system and which has an associated fuel tank feeding said electric energy source, said method being **characterized in that** it comprises the determination of the activation (10) or non-activation of the supplementary electric energy source and, in case of activation, the control of the latter for it to supply an electric power level (P_RE) chosen exclusively from a first low power level (P1) and a second high power level (P2), according to the sign of the difference calculated between the variation of a tank fullness state and the variation of a battery charge state, the first and second power levels being defined in such a way as to limit the energy losses associated with the conversion of the fuel into electric energy by the supplementary electric energy source.

2. Method according to Claim 1, **characterized in that** the first low power level is chosen if the difference is negative and the second high power level is chosen if said difference is positive.

3. Method according to Claim 1 or 2, **characterized in that** the variation of a tank fullness state comprises the determination of a first ratio between a current tank fullness state and an initial tank fullness state upon the activation of the supplementary electric energy source, and **in that** the variation of the battery charge state comprises the determination of a second ratio between a current battery charge state and an initial battery charge state upon the activation of the supplementary electric energy source.

4. Method according to Claim 3, **characterized in that** the determination of the variation of the battery charge state takes account of a battery minimum charge threshold.

5. Method according to any one of the preceding claims, **characterized in that** the supplementary electric energy source is used to recharge the battery if the electric power level (P_RE) supplied by said supplementary electric energy source is greater than the electric power required (Pe) by the electric traction system.

6. Method according to any one of the preceding claims, **characterized in that** it is coupled with a motor vehicle navigation system and **in that** the determination of the activation of the supplementary electric energy source and the control of the latter take account of parameters supplied by the vehicle navigation system.

7. Method according to Claim 6, **characterized in that** the parameters supplied by the navigation system comprise at least one of the following parameters taken from a vehicle arrival point, an itinerary defined for the vehicle, and information identifying areas with restricted pollutant emissions along said itinerary.

8. Method according to any one of the preceding claims, **characterized in that** the supplementary electric energy source comprises an internal combustion engine coupled to an alternator, or a fuel cell supplied directly with hydrogen, or a fuel cell coupled to a reforming system.

9. Method according to any one of the preceding claims, **characterized in that** the electric traction system comprises an electric machine able to function in motor mode and in generator mode.

## Patentansprüche

1. Verfahren für das Management der Energie in einem Kraftfahrzeug, das ein elektrisches Traktionssystem enthält, das von wenigstens einer Batterie und von einer Quelle für elektrische Energie zusätzlich zu der Batterie versorgt wird, die die elektrische Leistung, die von der Batterie für die Versorgung des elektrischen Traktionssystems geliefert wird, ergänzen kann, und dem ein Kraftstoffvorratsbehälter zugeordnet ist, der die Quelle für elektrische Energie versorgt, wobei das Verfahren **dadurch gekennzeichnet ist, dass** es das Bestimmen, ob die zusätzliche Quelle für elektrische Energie aktiviert ist (10) oder nicht, und im Fall der Aktivierung deren Steuerung, damit sie einen elektrischen Leistungspegel (P_RE) liefert, der ausschließlich aus einem ersten niedrigen Leistungspegel (P1) und einem zweiten hohen Leistungspegel (P2) je nach Vorzeichen des berechneten Abstandes zwischen der Veränderung eines Befüllungszustands des Vorratsbehälters und der Veränderung eines Ladezustands der Batterie gewählt wird, enthält, wobei der erste und der zweite Leistungspegel in der Weise definiert sind, dass Energieverluste, die mit der Umwandlung von Kraftstoff in elektrische Energie durch die zusätzliche Quelle für elektrische Energie in Beziehung stehen, begrenzt werden.

2. Verfahren nach Anspruch 1, **dadurch gekennzeichnet, dass** der erste niedrige Leistungspegel gewählt wird, wenn der Abstand negativ ist, und der zweite hohe Leistungspegel gewählt wird, wenn der Abstand positiv ist.

3. Verfahren nach Anspruch 1 oder 2, **dadurch gekennzeichnet, dass** die Veränderung des Befüllungszustands des Vorratsbehälters das Bestimmen eines ersten Verhältnisses zwischen einem momentanen Befüllungszustand des Vorratsbehälters und einem anfänglichen Befüllungszustand des Vorratsbehälters bei der Aktivierung der zusätzlichen Quelle für elektrische Energie enthält und dass die Veränderung des Ladezustands der Batterie das Bestimmen eines zweiten Verhältnisses zwischen einem momentanen Ladezustand der Batterie und einem anfänglichen Ladezustand der Batterie bei der Aktivierung der zusätzlichen Quelle für elektrische Energie enthält.

4. Verfahren nach Anspruch 3, **dadurch gekennzeichnet, dass** das Bestimmen der Veränderung des Ladezustands der Batterie einen minimalen Ladeschwellenwert der Batterie berücksichtigt.

5. Verfahren nach einem der vorhergehenden Ansprüche, **dadurch gekennzeichnet, dass** die zusätzliche Quelle für elektrische Energie zum Wiederaufladen der Batterie verwendet wird, falls der elektrische Leistungspegel (P_Re), der von der zusätzlichen Quelle für elektrische Energie geliefert wird, größer ist als die von dem elektrischen Traktionssystem angeforderte elektrische Leistung (Pe).

6. Verfahren nach einem der vorhergehenden Ansprüche, **dadurch gekennzeichnet, dass** es mit einem Navigationssystem des Kraftfahrzeugs gekoppelt ist und dass das Bestimmen der Aktivierung der zusätzlichen Quelle für elektrische Energie und deren Steuerung Parameter berücksichtigen, die von dem Navigationssystem des Fahrzeugs geliefert werden.

7. Verfahren nach Anspruch 6, **dadurch gekennzeichnet, dass** die von dem Navigationssystem gelieferten Parameter wenigstens einen der folgenden Parameter enthalten: einen Ankunftszeitpunkt des Fahrzeugs, eine für das Fahrzeug definierte Route und Identifizierungsinformationen für Zonen mit beschränkter Schadstoffemission längs dieser Route.

8. Verfahren nach einem der vorhergehenden Ansprüche, **dadurch gekennzeichnet, dass** die zusätzliche Quelle für elektrische Energie einen mit einem Wechselstromgenerator gekoppelten Verbrennungsmotor oder eine direkt mit Wasserstoff versorgte Brennstoffzelle oder eine mit einem Reformierungssystem gekoppelte Brennstoffzelle enthält.

9. Verfahren nach einem der vorhergehenden Ansprüche, **dadurch gekennzeichnet, dass** das elektrische Traktionssystem eine elektrische Maschine enthält, die in der Motorbetriebsart und in der Generatorbetriebsart arbeiten kann.
